# EUROPÄISCHE PATENTSCHRIFT

(11) **EP 2 934 877 B1**
(45) Veröffentlichungstag und Bekanntmachung des Hinweises auf die Patenterteilung: **25.10.2017**
(21) Anmeldenummer: 13811187.7
(22) Anmeldetag: 17.12.2013
(51) Int. Cl.: B32B 7/12, B27D 5/00, B32B 21/00, B32B 21/04, B32B 21/08, B32B 27/08, B32B 3/02, B29C 63/00, B32B 1/04

(54) **KANTENUMLEIMER**
EDGE-BAND
BORDURE DE PROTECTION

(30) Priorität: 20.12.2012 DE 102012223987
(43) Veröffentlichungstag der Anmeldung: 28.10.2015
(73) Patentinhaber: HOMAG GmbH, 72296 Schopfloch (DE)
(72) Erfinder: SCHMID, Johannes, 72181 Starzach (DE)
(74) Vertreter: Hoffmann Eitle
(86) Internationale Anmeldenummer: PCT/EP2013/076876
(87) Internationale Veröffentlichungsnummer: WO 2014/095844

(56) Entgegenhaltungen:
- WO-A1-00/50221
- DE-A1- 19 955 575

## Beschreibung

### Technisches Gebiet

Die vorliegende Erfindung betrifft ein Verfahren zum Beschichten eines Werkstücks, an bevorzugt einer Schmalseite eines Werkstücks. Die hier betroffenen Werkstücke sind insbesondere aus Holz, Holzwerkstoffen, wie Spanplatten, oder Verbundmaterial. Ferner können die angesprochenen Werkstücke aus Leichtbaumaterial sein.

Unter Beschichtungsmaterial wird in dieser Anmeldung ein Beschichtungsmaterial mit begrenzter Flexibilität verstanden, wie zum Beispiel eine bahnförmige oder streifenförmige Schmalseitenbeschichtung aus Kunststoff oder Echtholzfurnier.

### Stand der Technik

Als Stand der Technik ist die DE 199 55 575 A1 bekannt, die ein Verfahren sowie eine Vorrichtung zum Anhaften eines Deckmaterials an Werkstückoberflächen von fortlaufend bewegten oder stationär angeordneten platten- oder leistenförmigen Werkstücken betrifft. Hierzu wird ein band- oder streifenförmiges Haftelement bereitgestellt, das mit einem aktivierbaren Haftmittel versehen ist. Dieses Haftmittel wird zumindest teilweise aktiviert, um auf diese Weise eine Verbindung zwischen dem Werkstück und einem Deckmaterial bereitzustellen. Als Haftmittel-Aktivierungseinrichtung wird beispielsweise ein sogenannter Heizkeil verwendet.

Ferner ist die DE 10 2011 015 898 A1 bekannt, die eine Kantenbeschichtungsvorrichtung zum Aufbringen eines bandförmigen, mehrschichtigen Kantenstreifens auf Schmalseiten eines Werkstücks zeigt. Der Kantenstreifen wird hierbei kleberfrei wärmeaktiviert und auf der Schmalseite befestigt. Um den bandförmigen Kantenstreifen zur Aufbringung auf einer Schmalseite eines Werkstücks aufzubereiten, wird über einen Auslass Heißluft oder Heißgas auf den Kantenstreifen zugeführt. Gemäß einer Ausführungsform ist der mehrschichtige, kleberfrei aktivierbare Kantenstreifen ein mindestens zweischichtig extrudierter Kantenstreifen.

Als weiterer Stand der Technik ist die DE 199 40 329 A1 bekannt, die ein Verfahren zum Befestigen von Deckleisten auf den Schmalseiten von Möbelplatten offenbart. Die Deckleisten werden unmittelbar auf die Schmalseiten aufgebracht und mit den Schmalseiten in adhäsiven Verbund gebracht, z.B. im Wege des Aufschweißens.

Ferner ist die EP 0 782 917 A1 zu nennen, die eine beschichtete Holzplatte betrifft, welche mit einem elastischen, thermoplastischen Film beschichtet wurde. Der Film umfasst hierbei in einer Ausführungsform drei Lagen, nämlich eine untere Lage (thermoplastischer Film), die am Werkstück anliegt, eine obere äußere Lage, die nach außen weist, sowie eine Zwischenlage, die zwischen der oberen und unteren Lage eingefügt ist. Bei der unteren Lage kann es sich um einen EVA-Film handeln.

Generell ist es bekannt, ein Haftmittel zwischen einer Holzwerkstoffplatte und einem Beschichtungsmaterial zu verwenden. Dabei kommen dem Haftmittel unterschiedliche Aufgaben zu, insbesondere das Füllen offenporiger Abschnitte des Werkstücks, Bereitstellen einer Haftung zum Holzwerkstoff und ggf. losen Spänen, sowie Haftung zum Deckmaterial/Beschichtungsmaterial.

Wird eines der zuvor genannten Beschichtungsmaterialien auf ein Werkstück aufgebracht, so ist es üblich, dass in einem nachfolgenden Verfahrensschritt ggf. austretendes Haftmaterial mittels einer Ziehklinge entfernt wird, und/oder die Kanten mit einem Bearbeitungswerkzeug, insbesondere Profilfräser, nachbearbeitet werden. Bei dieser Nachbearbeitung wird überstehendes Beschichtungsmaterial entfernt und ggf. eine Form wie ein Radius in das Beschichtungsmaterial eingebracht.

Hierbei hat sich gezeigt, dass zum einen Toleranzen an der zu beschichtenden Seite des Werkstücks ausgeglichen werden müssen, um den hohen Kundenanforderungen gerecht zu werden. Ferner wurde festgestellt, dass auch das Beschichtungsmaterial selbst Dickentoleranzen aufweisen kann, die im Stand der Technik ggf. ohne weitere Kombination in die Bearbeitungsergebnisse einfließen. In diesem Zusammenhang wird auf die deutsche Patentanmeldung mit dem amtlichen Aktenzeichen 10 2012 302 503.0 verwiesen, die auf ein Verfahren sowie eine Vorrichtung zur Kompensation von Dickentoleranzen des Beschichtungsmaterials gerichtet ist.

### Gegenstand der Erfindung

Aufgabe der vorliegenden Erfindung ist es, ein Beschichtungsverfahren bereitzustellen, wobei das Beschichtungsmaterial selbst auf die durch das jeweilige Werkstück gestellten Anforderungen reagieren kann, um eine optisch ansprechende Beschichtung des Werkstücks zu erreichen.

Diese Aufgabe wird durch ein Verfahren gemäß Anspruch 1 erreicht. Weitere bevorzugte Ausführungsformen sind den abhängigen Ansprüchen zu entnehmen.

Kerngedanke der vorliegenden Erfindung ist es dabei, das Beschichtungsmaterial mehrschichtig bereitzustellen, wobei neben einer Trägerschicht mehrere aktivierbare Schichten zur Verfügung gestellt werden, die jeweils durch einen Energieeintrag aktivierbar sind. Hierbei ist die Haftschicht, die beim Fügen des Beschichtungsmaterials am Werkstück mit diesem in Kontakt kommt, primär - jedoch nicht ausschließlich - zum Bereitstellen einer adhäsiven Bindung vorgesehen. Eine weitere aktivierbare Schicht, die sich zwischen der Trägerschicht und der aktivierbaren Haftschicht befindet, soll eine weitere Funktion übernehmen, um das Beschichtungsmaterial an die Anforderungen des jeweiligen Werkstücks anzupassen. Beispielsweise kann die weitere Schicht als eine Ausgleichs- oder Toleranzschicht fungieren, um beispielsweise Unebenheiten am Werkstück oder Unregelmäßigkeiten der Dicke des Beschichtungsmaterials auszugleichen.

"Aktivierbar" im Sinne der vorliegenden Anmeldung bedeutet, dass das entsprechende Element, also beispielsweise die Haftschicht oder die weitere Schicht, mittels Energieeintrag von einem festen Zustand in einen weichen Zustand versetzt werden können, der der jeweiligen Schicht eine neue oder zusätzliche Funktion zuweist. Die Haftschicht entfaltet im aktivierten Zustand beispielsweise eine adhäsive Wirkung. Die weitere Schicht kann ebenfalls eine adhäsive Wirkung entfalten, und/oder ihr Volumen verändern. Die Änderung des Volumens kann nach der Aktivierung, insbesondere beim Erkalten der weiteren Schicht, dauerhaft bleiben.

"Aktivierungsträge" im Sinne der vorliegenden Anmeldung bedeutet, dass das entsprechende Element weniger bis gar nicht auf eine eingebrachte Energie reagiert.

Bei den in dieser Anmeldung genannten Breit- oder Schmalseiten handelt es sich z.B. um die Arbeitsseite oder Stirnseite eines Werkstücks, rein beispielhaft einer Küchenarbeitsplatte.

Das erfindungsgemäß verwendete Beschichtungsmaterial hat den Vorteil, dass dieses eine Reihe von Funktionen erfüllt. Zum einen können durch die Haftschicht Poren des Werkstücks gefüllt werden, und eine Haftung zum Werkstoff des Werkstücks (beispielsweise Holzwerkstoff und lose Späne) sowie zum Trägermaterial wird sichergestellt. Ferner wird das Werkstück, das beispielsweise aus einem Holzwerkstoff besteht, durch die Beschichtung vergütet, und die physikalischen Eigenschaften werden verbessert. Bei der Nachbearbeitung in einer Beschichtungsmaschine werden die Nachbearbeitungswerkzeuge und die Möbelplatte "verschmiert". Ferner kann sowohl die Form als auch die Lage des Beschichtungsmaterials stabil gehalten werden.

Darüber hinaus können die Schichten des erfindungsgemäßen Beschichtungsmaterials auf weitere Anforderungen an das zu beschichtende Werkstück abgestimmt werden. Handelt es sich beispielsweise um ein Möbelstück, so kann dieses auf seinen Einsatz im Wohnbereich, in der Küche oder einem Feuchtraum ausgelegt werden.

Das neuartige Beschichtungsmaterial kann - rein beispielhaft - auf ein Möbelelement oder Ähnliches aufgebracht werden. Die Vergütung des Möbelelements kann mit dem erfindungsgemäßen Beschichtungsmaterial aufgewertet und die physikalischen Eigenschaften verbessert werden (Feuchtigkeit, Wärme). Im Übrigen kann das Design des Haftmittels abgestimmt mit den konkreten Ansprüchen weiterentwickelt werden.

Gemäß einer bevorzugten Ausführungsform ist eine Trennschicht zwischen der Haftschicht und der weiteren Schicht vorgesehen ist, welche Trennschicht aktivierungsträge ist. Auf diese Weise stellt die Trennschicht sicher, dass die Haftschicht und die weitere Schicht bei Aktivierung von zumindest einer dieser Schichten nicht durchmischt werden. Demnach können die Haftschicht und die weitere Schicht stets ihre jeweilige Funktion erfüllen.

Gemäß einer weiteren Ausführungsform sind die Haftschicht und die weitere Schicht durch die gleiche Energiequelle aktivierbar. Demnach kann die gleiche Energiequelle genutzt werden. Alternativ hierzu können die Haftschicht und die weitere Schicht durch unterschiedliche Energiequellen aktivierbar sein. Gemäß dieser Alternative kann auf die jeweiligen Anforderungen bzw. die jeweilige Zusammensetzung der Haftschicht und der weiteren Schicht gezielt Einfluss genommen werden.

Bei der zumindest einen genannten Energiequellen kann es sich um eine Energiequelle handeln, die ausgewählt ist aus der Gruppe aufweisend Laser, LED, Heißluftquelle, Infrarotquelle, Ultraschallquelle, Magnetfeldquelle, Mikrowellenquelle, Plasmaquelle, und Begasungsquelle, insbesondere Heißluft- oder Heißgasquelle (ggf. mit Überdruck).

Der Laser erlaubt einen genau dosierbaren Energieeintrag in die Haftschicht und/oder weitere Schicht, und ermöglicht eine besonders schnelle Fokussierung der Energie auf einem zu aktivierenden Bereich. Ferner lässt sich mittels des Lasers die Energie besonders schnell bereitstellen, was eine besonders gute Prozessdynamik ermöglicht.

Die Begasungsquelle, insbesondere Heißluft- oder Heißgasquelle, ist eine relativ kostengünstige Variante, die keine besonderen Anschaffungen beim Kunden erfordert.

Bevorzugt ist ein Absorber, beispielsweise Farbpigmente, in der Haftschicht und bevorzugt in der weiteren Schicht vorgesehen ist, der insbesondere durch einen Laser aktivierbar ist. Der prozentuale Anteil des Absorbers in der Haftschicht bzw. der weiteren Schicht kann gemäß den jeweiligen Anforderungen eingestellt werden. Beispielsweise können die Haftschicht und die weitere Schicht einen gleichen prozentualen Anteil des Absorbers aufweisen, oder die Anteile des Absorbers der Haftschicht bzw. der weiteren Schicht können sich voneinander unterscheiden.

Die Trägerschicht kann ausgewählt sein aus der Gruppe, umfassend Papier, Pappe, Melamin, CPL (Continuous Pressing Laminate), Furnier, Kunststoff, insbesondere thermoplastischen Kunststoff, Metall, und Kombinationen hiervon. Das erfindungsgemäße Beschichtungsmaterial ist demnach variabel einsetzbar.

Eine weitere Ausführungsform des Verfahrens zeichnet sich dadurch aus, dass eine Absorberschicht an der Haftschicht angebracht, insbesondere aufgewalzt, ist, bevorzugt an der von der Trägerschicht weg weisenden Seite der Haftschicht. Diese Absorberschicht kann mittels einer der bereits genannten Energiequellen, insbesondere jedoch mit einem Laser, erwärmt werden. Die Wärme der Absorberschicht wird dann an die Haftschicht und an die weitere Schicht weitergegeben, um diese zu aktivieren.

### Kurze Beschreibung der Zeichnungen

- Fig. 1: ist eine Querschnittsansicht eines Beschichtungsmaterials gemäß einer Ausführungsform der vorliegenden Erfindung.
- Fig. 2: ist eine Draufsicht auf eine Vorrichtung zur Anbringung eines Beschichtungsmaterials an einem Werkstück

### Detaillierte Beschreibung der bevorzugten Ausführungsformen

Nachfolgend wird anhand der beigefügten Figuren eine bevorzugte Ausführungsform der vorliegenden Erfindung beschrieben. Weitere in diesem Zusammenhang genannten Variationen und Modifikationen können jeweils miteinander kombiniert werden, um neue Ausführungsformen der vorliegenden Erfindung auszubilden.

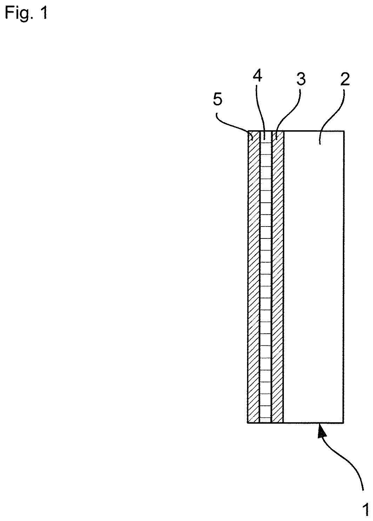

Fig. 1 ist eine Darstellung, die einen Querschnitt eines Beschichtungsmaterials 1 gemäß einer Ausführungsform der vorliegenden Erfindung zeigt. Hierbei umfasst das Beschichtungsmaterial 1 eine Trägerschicht 2, die bei Aufbringung des Beschichtungsmaterials 1 auf einem Werkstück W von diesem weg weist. Demnach übernimmt die Trägerschicht auch die Aufgabe eines Dekormaterials, und kann hierzu aus verschiedensten Materialien bestehen, eine Pigmentierung aufweisen und/oder mit einer Struktur versehen sein.

Ferner umfasst das Beschichtungsmaterial 1 eine Haftschicht 5, die bei Aufbringung des Beschichtungsmaterials 1 auf ein Werkstück W zu diesem weist und eine adhäsive Bindung mit dem Werkstück bereitstellt.

Zwischen der Haftschicht 5 und der Trägerschicht 2 ist eine weitere Schicht 3 vorgesehen, die in der vorliegenden Ausführungsform auf einem ähnlichen bzw. gleichen Material ausgebildet ist wie die Haftschicht 5.

Gemäß der vorliegenden Ausführungsform umfassen demnach sowohl die Haftschicht 5 als auch die weitere Schicht 3 Absorberelemente, beispielsweise Absorberpartikel, die in die Haftschicht 5 und die weitere Schicht 3 eingebracht sind. Die Absorberpartikel zeichnen sich dadurch aus, dass diese durch eine Energiequelle Energie aufnehmen können, und diese beispielsweise in Form von Wärme an ihre Umgebung abgeben.

Im Rahmen der vorliegenden Ausführungsform sind die Absorberpartikel so ausgebildet, dass sie durch einen Laserstrahl aktiviert bzw. erwärmt werden, um hierdurch eine Aktivierung der Haftschicht 5 sowie der weiteren Schicht 3 bereitzustellen. Da die Haftschicht primär die Aufgabe übernimmt, eine adhäsive Bindung zum Werkstück bereitzustellen, und die weitere Schicht dazu vorgesehen ist, beispielsweise Toleranzen auszugleichen, kann vorteilhaft sein, in der Haftschicht 5 einen größeren Anteil an Absorberpartikeln vorzusehen als in der weiteren Schicht 3. Es ist jedoch ersichtlich, dass die Anteile an Absorberpartikeln entsprechend den konkreten Aufgaben variiert werden können.

Gemäß der vorliegenden Ausführungsform ist zwischen der Haftschicht 5 und der weiteren Schicht 3 eine aktivierungsträge. Trennschicht 4 vorgesehen, die verhindert, dass eine mittelbare Aktivierung der weiteren Schicht 3 durch eine Aktivierung der Haftschicht 5 stattfindet. Alternativ oder zusätzlich hierzu kann die Trennschicht auch die Aufgabe übernehmen, dass keine Vermischung der Haftschicht und der weiteren Schicht 3 stattfindet.

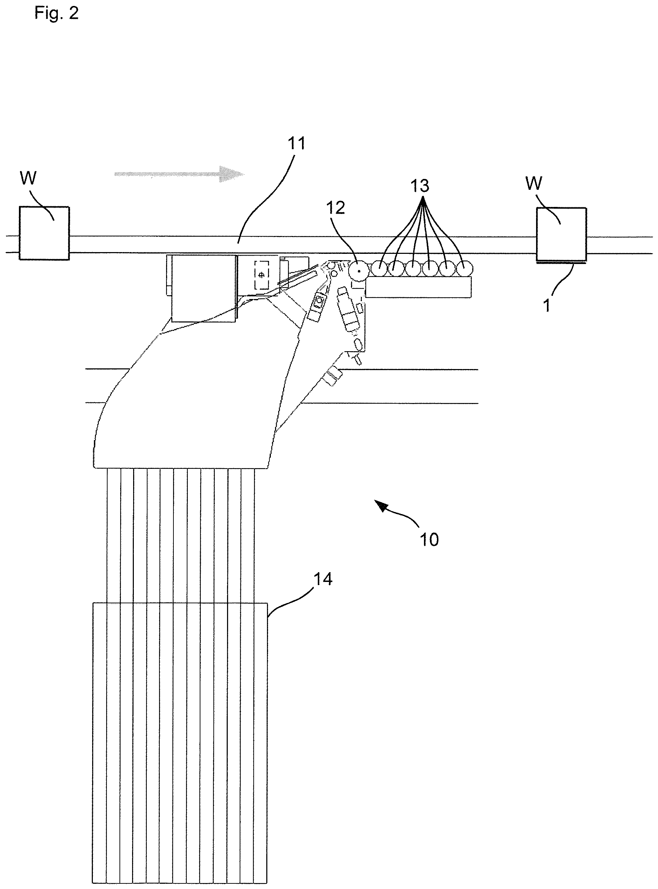

Figur 2 ist eine schematische Draufsicht einer Vorrichtung zum Anbringen des Beschichtungsmaterials 1 an einem Werkstück W. Hierzu wird das Werkstück W in einer Durchlaufrichtung bewegt, und das Beschichtungsmaterial 1 wird aus einem Speicher 14 zugeführt. In der vorliegenden Ausführungsform umfasst der Speicher 14 eine Vielzahl von Fächern, in die verschiedene Beschichtungsmaterialien eingelegt werden können.

Die gezeigte Vorrichtung 10 umfasst eine Andruckrolle 12, mit der ein auf die Seitenlänge des Werkstücks W zugeschnittener Abschnitt des Beschichtungsmaterials 1 an diesem Werkstück W angebracht werden kann, indem das Beschichtungsmaterial mit Druck gegen das Werkstück W gepresst wird. Ferner sind mehrere Nachdrückrollen 13 in der Vorrichtung 10 vorgesehen, die nach dem Fügen des Beschichtungsmaterials 1 am Werkstück W das Anhaften sicherstellen.

## Patentansprüche

1. Verfahren zum Beschichten eines Werkstücks insbesondere an dessen Schmalseite mit einem Beschichtungsmaterial (1), wobei das Beschichtungsmaterial (1) mehrschichtig ist und eine Trägerschicht (2), eine aktivierbare Haftschicht (5), sowie eine weitere, aktivierbare Schicht zwischen der Trägerschicht (2) und der aktivierbaren Haftschicht (5) aufweist, mit den Schritten:
Zuführen des Beschichtungsmaterials (1),
Aktivieren zumindest der Haftschicht (5) mittels einer ersten Energiequelle,
Aktivieren der weiteren aktivierbaren Schicht (3) mittels einer zweiten Energiequelle,
wobei die erste und zweite Energiequelle unterschiedlich sind,
Bewegen des Beschichtungsmaterials (1) und eines Werkstücks (W) relativ zueinander, und dabei Andrücken des Beschichtungsmaterials (1) an das Werkstück (W).

2. Verfahren gemäß Anspruch 1, **dadurch gekennzeichnet, dass** eine Trennschicht (4) zwischen der Haftschicht (5) und der weiteren aktivierbaren Schicht (3) vorgesehen ist, welche Trennschicht (4) aktivierungsträge ist.

3. Verfahren gemäß einem der vorangegangenen Ansprüche, **dadurch gekennzeichnet, dass** die zumindest eine Energiequelle ausgewählt ist aus der Gruppe bestehend aus Laser, LED, Heißluftquelle, Infrarotquelle, Ultraschallquelle, Magnetfeldquelle, Mikrowellenquelle, Plasmaquelle, und Begasungsquelle, insbesondere Heißluft- oder Heißgasquelle, letztere ggf. mit Überdruck.

4. Verfahren gemäß einem der vorangegangenen Ansprüche, **dadurch gekennzeichnet, dass** ein Absorber, insbesondere Farbpigmente, in der Haftschicht (5) und bevorzugt in der weiteren aktivierbaren Schicht (3) vorgesehen ist, der insbesondere durch einen Laser aktivierbar ist.

5. Verfahren gemäß einem der vorangegangenen Ansprüche, **dadurch gekennzeichnet, dass** die Trägerschicht (2) ausgewählt ist aus der Gruppe, umfassend Papier, Pappe, Melamin, CPL, Furnier, Massivholz, Kunststoff, insbesondere thermoplastischen Kunststoff, Metall, und Kombinationen hiervon.

6. Verfahren gemäß einem der Ansprüche 1-4, **dadurch gekennzeichnet, dass** zumindest die Trägerschicht (2) eine koextrudierte Schicht ist, bevorzugt alle Schichten des Beschichtungsmaterials (1).

7. Verfahren gemäß einem der vorangegangenen Ansprüche, **dadurch gekennzeichnet, dass** eine Absorberschicht an der Haftschicht (5) angebracht, insbesondere aufgewalzt, ist, bevorzugt an der von der Trägerschicht (2) weg weisenden Seite der Haftschicht (5).

## Claims

1. Method for coating a workpiece, in particular on its narrow side, with a coating material (1), wherein the coating material (1) is multi-layered and has a carrier layer (2), an activatable adhesive layer (5) and a further activatable layer between the carrier layer (2) and the activatable adhesive layer (5), having the steps of:
delivering the coating material (1),
activating at least the adhesive layer (5) by means of a first energy source,
activating the further activatable layer (3) by means of a second energy source,
wherein the first and second energy sources are different,
moving the coating material (1) and a workpiece (W) relative to each other, and in the process pressing the coating material (1) against the workpiece (W).

2. Method according to claim 1, **characterised in that** a separating layer (4) is provided between the adhesive layer (5) and the further activatable layer (3), which separating layer (4) does not react to activation.

3. Method according to any of the preceding claims, **characterised in that** the at least one energy source is selected from the group consisting of laser, LED, hot air source, infrared source, ultrasound source, magnetic field source, microwave source, plasma source and gas supply source, in particular hot air or hot gas source, the latter if occasion arises with overpressure.

4. Method according to any of the preceding claims, **characterised in that** an absorber, in particular colour pigments, is provided in the adhesive layer (5) and preferably in the further activatable layer (3), which is in particular activatable by a laser.

5. Method according to any of the preceding claims, **characterised in that** the carrier layer (2) is selected from the group comprising paper, cardboard, melamine, CPL, veneer, solid wood, plastic, in particular thermoplastic material, metal and combinations thereof.

6. Method according to any of claims 1-4, **characterised in that** at least the carrier layer (2) is a co-extruded layer, preferably all layers of the coating material (1).

7. Method according to any of the preceding claims, **characterised in that** an absorber layer is applied to the adhesive layer (5), in particular rolled on, preferably on the side of the adhesive layer (5) facing away from the carrier layer (2).

## Revendications

1. Procédé de revêtement d'une pièce à usiner, en particulier au niveau de sa tranche, avec un matériau de revêtement (1), dans lequel le matériau de revêtement (1) est en plusieurs couches et comporte une couche porteuse (2), une couche adhésive activable (5) ainsi qu'une autre couche activable entre la couche porteuse (2) et la couche adhésive activable (5), comprenant les étapes consistant à :
- amener du matériau de revêtement (1),
- activer au moins la couche adhésive (5) au moyen d'une première source d'énergie,
- activer l'autre couche activable (3) au moyen d'une deuxième source d'énergie, la première et la deuxième source d'énergie étant différentes,
- déplacer le matériau de revêtement (1) et une pièce à usiner (W) l'un par rapport à l'autre et, ce faisant, application du matériau de revêtement (1) contre la pièce à usiner (W).

2. Procédé selon la revendication 1, **caractérisé en ce qu'**une couche de séparation (4) est prévue entre la couche adhésive (5) et l'autre couche activable (3), laquelle couche de séparation (4) est inerte lors de l'activation.

3. Procédé selon l'une des revendications précédentes, **caractérisé en ce que** la au moins une source d'énergie est choisie dans le groupe constitué de : laser, LED, source d'air chaud, source d'infrarouges, source d'ultrasons, source de champ magnétique, source de micro-ondes, source de plasma et source de gaz, en particulier source d'air chaud ou de gaz chaud, cette dernière le cas échéant avec une surpression.

4. Procédé selon l'une des revendications précédentes, **caractérisé en ce qu'**un absorbeur, en particulier des pigments colorés, est prévu dans la couche adhésive (5) et de préférence dans l'autre couche activable (3), laquelle peut être activée en particulier par un laser.

5. Procédé selon l'une des revendications précédentes, **caractérisé en ce que** la couche porteuse (2) est choisie dans le groupe comprenant : papier, carton, mélamine, CPL, placage, bois massif, matière synthétique, en particulier matière synthétique thermoplastique, métal, et des combinaisons de ceux-ci.

6. Procédé selon l'une des revendications 1 à 4, **caractérisé en ce qu'**au moins la couche porteuse (2) est une couche coextrudée, de préférence toutes les couches du matériau de revêtement (1).

7. Procédé selon l'une des revendications précédentes, **caractérisé en ce qu'**une couche d'absorbeur est appliquée sur la couche adhésive (5), en particulier par laminage, de préférence du côté de la couche adhésive (5) qui est éloigné de la couche porteuse (2).
